# EUROPEAN PATENT SPECIFICATION

(11) **EP 2 709 356 B1**
(45) Date of publication and mention of the grant of the patent: **11.11.2020**
(21) Application number: 13180182.1
(22) Date of filing: 13.08.2013
(51) Int. Cl.: H04N 5/238, H04N 5/235

(54) **Method for operating a front camera of a motor vehicle considering the light of the headlight, corresponding device and motor vehicle**
Verfahren zum Betreiben einer Frontkamera eines Kraftfahrzeugs unter Berücksichtigung des Lichts des Scheinwerfers, entsprechende Vorrichtung und Kraftfahrzeug
Procédé de fonctionnement d'une caméra avant d'un véhicule automobile d'après la lumière du phare, dispositif correspondant et véhicule à moteur

(30) Priority: 13.09.2012 DE 102012018118
(43) Date of publication of application: 19.03.2014
(73) Proprietor: Valeo Schalter und Sensoren GmbH, 74321 Bietigheim-Bissingen (DE)
(72) Inventor: Hue, David, 95430 Butry sur Oise (FR)
(74) Representative: Claassen, Maarten Pieter

(56) References cited:
- EP-A2- 2 328 113
- WO-A1-2012/014266
- JP-A- 2006 011 671
- JP-A- 2011 244 298
- US-A1- 2011 074 956

## Description

The invention relates to a method for operating a front camera of a motor vehicle, by means of which images of an environmental region in direction of travel in front of the motor vehicle are captured. At least one light source of a frontal headlight of the motor vehicle is operated in pulsed manner and herein it is alternately switched between an active state and an inactive state. In the active state, the at least one light source is turned on, while it is turned off in the inactive state. A controllable shutter is disposed in front of an image sensor of the front camera - for example between the image sensor and optics - which is moved between a closed position, in which the shutter covers the image sensor against the environmental region, and an open position, in which the image sensor is exposed to light of the environmental region. In addition, the invention relates to a corresponding device for a motor vehicle as well as a motor vehicle with such a device.

Front cameras for motor vehicles are already prior art. A front camera usually captures images of an environmental region in front of the motor vehicle. Based on these images, then, road signs standing beside the road and/or markings directly placed on the road and/or pedestrians can for example be identified. The acquired information can then be output to the driver of the motor vehicle. It is also prior art to detect light sources external to vehicle - for instance the headlights of a preceding or else of an oncoming motor vehicle - based on the captured images. Depending on this detection, then, the own front headlight of the motor vehicle can be controlled and herein it can for example be switched between the high beam and dimmed beam. For example, if a headlight of a preceding or of an oncoming vehicle is identified, thus, the high beam can be deactivated and the dimmed beam can be activated.

Furthermore, it is known to insert a movable shutter in front of the image sensor of the front camera, which covers the image sensor against the environmental region in a closed position and can also be moved into an open position from this closed position, in which the image sensor is unblocked for the ambient light and thus is exposed to the ambient light. Such a solution is for example known from the document JP 2010 111 261. Here, the shutter is opened if the light source for the high beam of the headlight is turned on. Thus, it is ensured that the image sensor is only exposed to the ambient light if the environment is illuminated by the own headlight. The brightness of the images can therefore be increased.

If light sources external to vehicle such as the headlights of other vehicles are detected based on the images of the front camera, thus, there is a problem in that the light external to vehicle (for instance the headlights of other vehicles) often cannot be distinguished from the light of the own headlight, which is reflected on the road signs and other objects located in the environment. It has been realized that such distinction is not always ensured, which for example results in turning off the high beam of the own motor vehicle although there is no other vehicle in front of the own motor vehicle.

The document US 2011/074956 A1 discloses a prior art method for operating a front camera of a motor vehicle according to the preamble of claim 1.

It is an object of the invention to demonstrate a solution, how in a method of the initially mentioned kind, the images captured by the front camera can be processed more reliably than in the prior art, in particular with respect to the detection of external light sources. According to the invention, this object is solved by a method, by a device as well as by a motor vehicle having the features according to the respective independent claims. Advantageous implementations of the invention are the subject matter of the dependent claims, of the description and of the figures.

A method according to the invention serves for operating a front camera of a motor vehicle, by means of which images of an environmental region in direction of travel in front of the motor vehicle are captured, wherein at least one light source of a frontal headlight of the motor vehicle is operated in pulsed manner and herein it is alternately switched - in particular periodically with a frequency of for example greater than 100 Hz - between an active state and a further state. The at least one light source is activated in the active state and has in the further state lower intensity of light than in the active state. A shutter is disposed in front of an image sensor of the front camera, which is moved between a closed position and an open position. In the open position, the image sensor is exposed to the ambient light, while the shutter covers the image sensor against the environmental region in the closed position. For at least a preset first time interval, the movement of the shutter is controlled synchronously to the pulsed operation of the at least one light source of the frontal headlight, wherein the synchronous control of the shutter is effected such that the closed position of the shutter coincides with the active state of the light source and the open position of the shutter coincides with the further state of the light source. During the first time interval, at least one first image is captured by means of the image sensor.

Preferably, the further state is an inactive state, in which the at least one light source is deactivated. However, a further state can also be provided, in which the at least one light source has a low intensity of light greater than zero.

Thus, the invention takes the way to close the shutter and to cover the image sensor against the environmental region exactly if the at least one light source of the front headlight is turned on in the active state. During the first time interval, thus, (first) images can be captured, in which the environmental region is imaged without any additional illumination or only with a low illumination by the headlight of the own motor vehicle. Thus, in these images, light reflections of the own headlight do not occur such that the light sources external to vehicle can be reliably detected as such and confusion of the light sources external to vehicle with the reflected light of the own headlight does not occur. In this manner, it can also be prevented that the own headlight is switched from the high beam to the dimmed beam although there are no other vehicles in front of the motor vehicle. Accordingly, overall, a particularly reliable and robust control of the own headlight can be performed.

For example, the front camera can be disposed behind a windshield of the motor vehicle. Thus, it captures the environment in direction of travel in front of the motor vehicle. In particular, this can imply that a camera axis extending perpendicularly to the plane of the image sensor is oriented parallel to or along the vehicle longitudinal axis.

Preferably, the front camera is a video camera, which is able to capture a plurality of frames per second. Therein, the image can be either a CCD sensor or else a CMOS sensor. Therein, the capture of a frame is preferably effected during the so-called integration time of the image sensor. This means that the image sensor integrates the light incident on the same image sensor during the integration time and thus captures a frame. After elapse of the integration time, usually a short pause follows, and after the pause, then, the capture of the next image is effected. Therein, the integration time of the image sensor is preferably longer than the duration, in which the at least one light source of the headlight is switched into the active state. The integration time of the image sensor is preferably also longer than the double duration, in which the light source is in the active state.

The method according to the invention also has the advantage that fast and expensive image sensor does not have to be employed, which would be capable of synchronizing the capture of the images and thus the integration time with the pulsed operation of the headlight. Such image sensors would have to have a particularly fast integration time and therefore would be correspondingly expensive. Instead of employing such a particularly fast image sensor, the shutter is placed in front of the image sensor, which can be synchronized with the pulsed operation of the headlight. Thus, a "slower" image sensor can be employed, the integration time of which is longer than a cycle duration of the pulsed operation of the at least one light source.

In an embodiment, it is provided that an external light source is detected based on the at least one first image - it is captured during the first time interval. Preferably, a headlight of a preceding and/or of an oncoming vehicle is detected as the external light source. Then, the advantages of the method completely take effect, and the external light source is not confused with the light of the own headlight. The precision in the detection of the external light source is therefore considerably increased compared to the prior art.

If the external light source is identified, thus, the frontal headlight of the own motor vehicle can be controlled considering this external light source. In particular, this can be configured such that after identification of the headlight of a preceding and/or of an oncoming vehicle, the high beam of the own motor vehicle is turned off, and it is switched to the dimmed beam. Thus, the other traffic participants are not glared by the light of the motor vehicle.

Thus, the movement of the shutter synchronous with the pulsed operation of the at least one light source is effected during the first time interval, i.e. in particular in a first operating mode of the front camera. Apart from this first operating mode, a second operating mode can also be provided: for at least a preset second time interval - with the duration of at least one period of the pulsed operation of the at least one light source - the shutter can be continuously kept in the open position. Within the second time interval, then, at least one second image is captured by means of the image sensor. In this manner, two different images or two different groups of images are captured in total, namely at least one first image in the first operating mode, in which the shutter is moved synchronously with the pulsed operation of the light source, one the one hand, and at least one second image in the second operating mode, in which the shutter is continuously opened, on the other hand. Thus, the second image virtually corresponds to a "normal" image, which can be captured with the aid of a conventional camera without such a shutter. By the capture of such different images, the detection of the objects external to vehicle can be effected even more precisely, and the image processing algorithms can be improved.

Thus, the at least one second image and the at least one first image can be compared to each other. Preferably, a plurality of first images captured in different points in time and thus at different settings of the image sensor are compared in pairs with a plurality of second images. By the comparison of the two images, the objects illuminated by the own headlight can be reliably detected. Namely, these objects can be considerably better perceived in the second image, because they are illuminated by the headlight of the motor vehicle. In contrast, the first image is captured when these objects are not illuminated by the headlight. By subtraction of the two images, now, an object illuminated by the headlight, which does not have an own light source, can be reliably and precisely identified.

Based on the comparison of the two images, thus, in an embodiment, an object external to vehicle can be identified in the environmental region. In particular, this object is a "passive" object, which does not have an own light source and only reflects the light of the headlight. Now, such an object can be identified even in darkness based on a subtraction image, which is obtained by subtraction of the first image from the second image. Therein, for example, a road sign and/or a pedestrian can be identified as the object. This information about the identified road sign and/or about the pedestrian can then be output to the driver of the motor vehicle such that the driver is informed about the road sign and/or is warned of the presence of the pedestrian in the environmental region.

If the two images are compared to each other and for example the mentioned subtraction image is evaluated, thus, the detection of the external light source can be made plausible based on the comparison of the images - in particular depending on the subtraction image. This implies that the detection of the external light source can also be checked for the plausibility based on the first image depending on the comparison of the two images. In other words, it can be checked whether or not this light source is also present in the second image. This results in faultless detection of external light sources.

By capturing the second image too, in which the environmental region is illuminated by the own headlight, one also obtains additional information about the objects and obstacles external to vehicle, respectively, namely for example the color information and the like. This additional information can then be taken into account in presentation of the images on a display, and the images can for example be presented in color.

In particular, the described method is particularly advantageous in darkness and thus for example at night. However, the shutter can also be used at daytimes, in order to for example avoid the glare of the image sensor, if the intensity of the ambient light exceeds a predetermined limit value. For this purpose, for example, a light sensor can be employed by means of which the light intensity is measured. Additionally or alternatively, the intensity of the ambient light can also be determined by analysis of the captured images and/or depending on a gain factor adjusted in the camera. If the intensity of the ambient light exceeds a limit value, thus, the shutter can be controlled in the manner that it is periodically moved between the open position and the closed position. The frequency of this movement then does no longer have to be adapted to the pulsed operation of the headlight. In this case, the frequency and/or the duty cycle of the movement of the shutter can be adjusted depending on the current intensity of the ambient light.

In one embodiment, the synchronizing of the movement of the shutter with the pulsed operation of the at least one light source is carried out wirelessly. Here, respective communication devices can be provided, which communicate with each other wirelessly. This communication, during which data is transmitted between the respective devices, can be carried out, for example, according to the Bluetooth standard. Thus, a wire for the transmission of required information is not longer necessary.

With respect to the control of the shutter, different embodiments can be provided:
In an embodiment, the movement of the shutter can be controlled by means of a controller of the headlight. Here, the shutter is thus controlled by a controller, which is also used for controlling the at least one light source of the headlight. In particular, this embodiment is particularly advantageous for the first operating mode, in which the shutter is moved synchronously to the pulsed operation of the headlight. Namely, the controller of the headlight always knows the frequency of the light source and the state, in which the at least one light source currently is. Thus, this controller can also output corresponding control signals to the shutter, by which the shutter is controlled synchronously with the light source.

Additionally or alternatively, such control signals can also be output to the shutter by means of a control unit of the front camera. This internal control unit of the front camera can for example also be the image sensor alone or else a microcontroller of the camera. By the internal control unit of the front camera, for example, the second time interval can be initiated, in which the shutter is permanently and continuously kept in the open position such that the image sensor is not covered. In this second time interval, then, the at least one second image can be captured.

In addition, the invention relates to a device for a motor vehicle, which is formed for performing a method according to the invention.

A motor vehicle according to the invention, in particular a passenger car, includes a device according to the invention.

The preferred embodiments presented with respect to the method according to the invention and the advantages thereof correspondingly apply to the device according to the invention as well as to the motor vehicle according to the invention.

Further features of the invention are apparent from the claims, the figures and the description of figures. All of the features and feature combinations mentioned above in the description as well as the features and feature combinations mentioned below in the description of figures and/or shown in the figures alone are usable not only in the respectively specified combination, but also in other combinations or else alone.

Now, the invention is explained in more detail based on individual preferred embodiments as well as with reference to the attached drawings. It is emphasized that the embodiment described below represents a preferred embodiment of the invention and the invention thus is not restricted to this exemplary embodiment.

There show:
- Fig. 1: in schematic illustration a motor vehicle with a device according to an embodiment of the invention;
- Fig. 2: in schematic illustration a block diagram of a device according to an embodiment of the invention;
- Fig. 3a and 3b: temporal progresses;
- Fig. 4: in schematic illustration a block diagram of a device according to an embodiment of the invention; and
- Fig. 5a to 5c: temporal progresses.

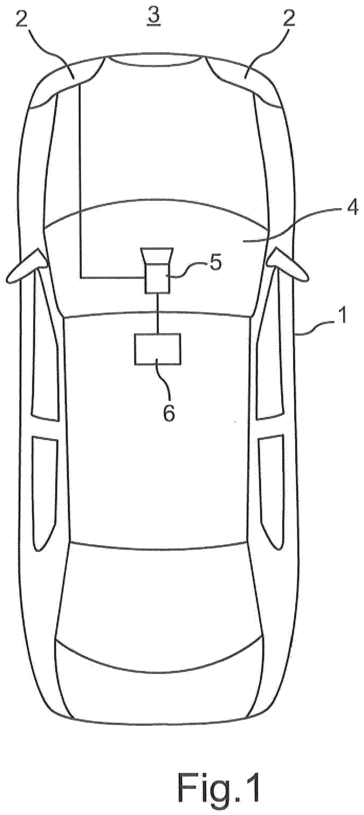

A motor vehicle 1 illustrated in Fig. 1 is for example a passenger car. In known manner, the motor vehicle 1 has two frontal headlights 2, which illuminate an environmental region 3 in front of the motor vehicle 1. The headlights 2 include light sources for the dimmed beam as well as for the high beam as well as optionally for the daytime running light. Therein, the invention is not restricted to a specific light type and can be applied both to implementations with high beam and with dimmed beam and optionally also with daytime running light.

A front camera 5 is attached behind a windshield 4 of the motor vehicle 1, which is a video camera. The front camera 5 provides images of the environmental region 3 in front of the motor vehicle 1. Optionally, the images can also be displayed in the interior of the motor vehicle 1 and thus optionally on a display 6. For example, the display 6 can be disposed in an instrument cluster or on an instrument panel or else on a center console and thus is in the visual range of the driver.

The front camera 5 is electrically coupled to at least one headlight 2.

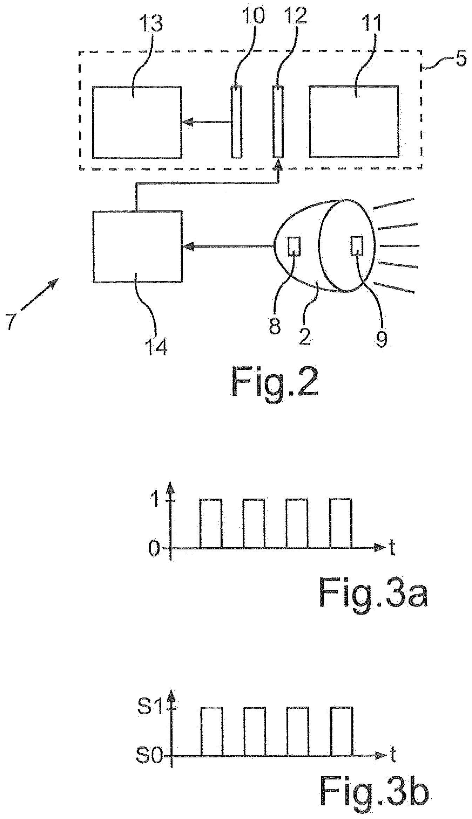

In Fig. 2, a device 7 with the headlight 2 and the front camera 5 is illustrated in more detail. A controller 8 is associated with the headlight 2, which controls at least one light source 9 of the headlight 2. Therein, the light source 9 is operated in pulsed manner and for example switched with a frequency of at least 100 Hz between an active state and an inactive state. This switching of the light source 9 between the active state and the inactive state is periodically effected. This periodic switching of the light source 9 is illustrated in Fig. 3a based on a progress over the time t. Therein, the light source 9 is toggled between the state "0" and the state "1", namely with the mentioned frequency of for example at least 100 Hz. The state "0" is the inactive state, in which the light source 9 is turned off. In contrast, in the state "1" and thus in the active state, the light source 9 is turned on.

Such a pulsed control of light sources can for example apply both to the dimmed beam and to the high beam.

With reference again to Fig. 2, the front camera 5 includes an image sensor 10, by means of which the images of the environmental region 3 are captured. The image sensor 10 can for example be a CCD sensor or a CMOS sensor. A controllable shutter 12 is disposed between the image sensor 10 on the one hand and an optical means 11 on the other hand. Therein, the optical means 11 can include e.g. a lens and the like.

The shutter 12 serves for covering the image sensor 10 against the environmental region 3 and thus against the ambient light. Therein, the shutter 12 can be moved back and forth between an open position and a closed position. In the closed position, it covers the image sensor 10 against the environmental region 3, while the image sensor 10 is completely unblocked and thus not covered in the open position. Therefore, in the open position of the shutter 12, the image sensor 10 is able to detect the ambient light.

The image sensor 10 is electrically coupled to a microprocessor 13, by means of which the images can be processed.

In the embodiment according to Fig. 2, the shutter 12 is controlled by means of the controller 8 of the headlight 2, namely via a driver 14. Thus, the controller 8 can control the movement of the shutter 12 between the open position and the closed position.

Now, the control of the shutter 12 is explained with reference to Fig. 3b. Therein, the shutter 12 is moved back and forth between the open position S0 and the closed position S1. This movement of the shutter 12 occurs - as is apparent from Fig. 3a and 3b - synchronously with the switching of the light source 9. Namely, the two temporal progresses in Fig. 3a and 3b are identical. This implies that the open position SO of the shutter 12 completely coincides with the inactive state of the light source 9, while the closed position S1 of the shutter 12 completely coincides with the active state of the light source 9. Such a temporally synchronous movement of the shutter 12 has the advantage that light sources external to vehicle such as for example headlights of other vehicles can be detected without much effort based on the captured images, because these external light sources cannot be confused with the light of the own headlight 2, which is reflected on different objects in the environmental region 3.

This synchronous movement of the shutter 12 can also apply to the entire complete operation of the front camera 5. This means that the shutter 12 is controlled synchronously to the pulsed operation of the light source 9 as long as the headlight 2 is activated at all. If the headlight 2 is not activated, thus, the shutter 12 can be opened. At this daytime, the shutter 12 optionally can also be moved back and forth between the open position and the closed position at times, namely depending on the current intensity of the ambient light. This intensity can be determined with the aid of a corresponding sensor and/or based on the images. Thus, the image sensor 10 is prevented from being glared if the intensity of the ambient light exceeds a predetermined limit value,

It can also be provided that the shutter 12 is not controlled synchronously to the pulsed operation of the light source 9 all the time with the activated headlight 2. In an embodiment, this synchronous control can only be performed for a preset first time interval, while the shutter 12 can be continuously kept in the open position for a subsequent second time interval.

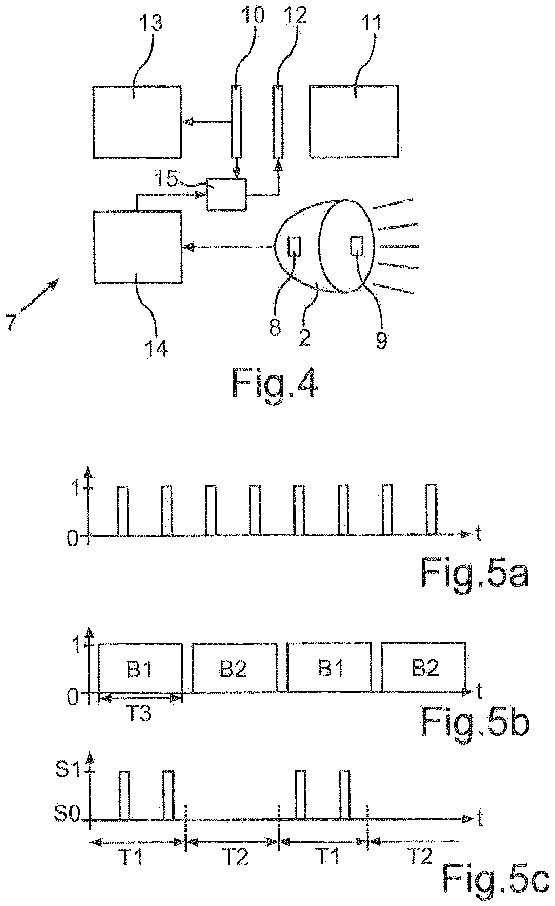

Now, in Fig. 4, the device 7 according to a further embodiment is illustrated. The shutter 12 can be controlled not only by means of the controller 8 of the headlight 2, but additionally also by means of the image sensor 10 alone or else by means of the microprocessor 13. For this purpose, both the driver 14 and the image sensor 10 are electrically connected to the shutter 12 via a distribution board 15.

By means of the image sensor 10 or the microprocessor 13, the front camera 5 can then be switched from a first operating mode, in which the shutter 12 is controlled synchronously to the pulsed operation of the light source 9, into a second operating mode. In this second operating mode, the shutter 12 is continuously kept in the open position for a second time interval. Therein, this second time interval has a duration of at least one period of the pulsed operation of the light source 9.

With reference now to Fig. 5a to 5c, the operation of the front camera 5 according to an embodiment is explained in more detail. Therein, in Fig. 5a, the pulsed operation of the light source 9 and thus a temporal progress of the state of the light source 9 are illustrated. As already explained with reference to Fig. 3, the light source 9 is periodically toggled with a frequency of at least 100 Hz between the inactive state "0" and the active state "1". Therein, Fig. 5c shows the temporal progress of the movement of the shutter 12; the shutter 12 is moved between the open position S0 and the closed position S1. As is apparent from Fig. 5c, the shutter 12 is controlled synchronously to the pulsed operation of the light source 9 for a first time interval T1 such that the closed position S1 of the shutter 12 coincides with the active state "1" of the light source 9 and the open position S0 of the shutter 12 coincides with the inactive state "0" of the light source 9. After elapse of this time interval T1, subsequently, a second time interval T2 begins, for which the shutter 12 is continuously kept in the open position S0. Therein, the time intervals T1 and T2 can have the same duration.

The time intervals T1 and T2 are dimensioned such that they are slightly longer than an integration time T3 of the image sensor 10. In addition, the time intervals T1, T2 are slightly larger than the double period of the pulsed operation of the light source 9. The time intervals T1, T2 are alternately repeated according to Fig. 5c.

In Fig. 5b, the integration times T3 of the image sensor 10 are illustrated. Therein, the image sensor 10 captures a frame during the integration time T3. Thus, the image sensor 10 is alternately switched between a state "0" and a state "1", wherein light is not detected by the image sensor 10 in the state "0", while integration of the light and thus capture of an image is effected in the state "1". Therein, the duration of the capture of a frame corresponds to the integration time T3 of the image sensor 10.

As is further apparent from Fig. 5b, the image sensor 10 alternately captures a first image B1 and then a second image B2. The first image B1 is captured within the first time interval T1 and thus in the first operating mode, while the second image B2 is captured within the second time interval T2 and thus in the second operating mode. Therefore, a group of first images B1 as well as a group of second images B2 are overall present. In the first images B1, the environmental region 3 is free from the light of the headlight 2. In contrast, in the second images B2, the environmental region 3 is imaged with additional illumination by the headlight 2. Based on these different images B1 and B2, now, very different algorithms can be executed and different functionalities can be provided.

Based on a comparison of the images B1 and B2, for example, the detection of the external light source can be made plausible, which has been detected based on the first images B1. For example, this can be configured such that a subtraction image is obtained by subtraction of the first image B1 from the immediately succeeding second image B2. Then, it can be checked whether or not the external light source is present in the subtraction image.

Based on such a subtraction image, other objects external to vehicle, namely in particular such objects not radiating light themselves and only reflecting the light of the headlight 2, can also be identified. For example, such objects can be road signs and/or pedestrians. Such objects are illuminated by the light of the headlight 2 and thus are particularly well perceivable in the second image B2. Accordingly, these objects can be particularly well perceived in the subtraction image. Information about an identified road sign and/or about a pedestrian in the environmental region 3 can then be output to the driver.

## Claims

1. Method for operating a front camera (5) of a motor vehicle (1), by means of which images (B1, B2) of an environmental region (3) in the direction of travel in front of the motor vehicle (1) are captured, wherein at least one light source (9) of a frontal headlight (2) of the motor vehicle (1) is operated in pulsed manner and herein it is alternately switched between an active state ("1"), in which the at least one light source (9) is turned on, and a further state ("0"), in which the at least one light source (9) has lower light intensity than in the active state ("1"), and wherein a shutter (12) disposed in front of an image sensor (10) of the front camera (5) is moved between a closed position (S1), in which the shutter (12) covers the image sensor (10) against the environmental region (3), and an open position (S0), in which the image sensor (10) is exposed to light of the environmental region (3), **characterized in that**
for at least a preset first time interval (T1), the movement of the shutter (12) is controlled synchronously to the pulsed operation of the at least one light source (9), such that the closed position (S1) of the shutter (12) completely coincides with the active state ("1") of the light source (9) and the open position (S0) of the shutter (12) completely coincides with the further state ("0") of the light source (9), wherein at least one first image (B1) is captured by means of the image sensor (10) within the first time interval (T1).

2. Method according to claim 1,
**characterized in that**
an external light source is detected based on the at least one first image (B1).

3. Method according to claim 2,
**characterized in that**
the frontal headlight (2) of the motor vehicle (1) is controlled considering the external light source.

4. Method according to anyone of the preceding claims,
**characterized in that**
for at least a preset second time interval (T2) of at least one period of the pulsed operation of the at least one light source (9), the shutter (12) is continuously kept in the open position (S0), and at least one second image (B2) is captured by means of the image sensor (10) within the second time interval (T2).

5. Method according to claim 4,
**characterized in that**
the at least one first image (B1) and the at least one second image (B2) are compared to each other.

6. Method according to claim 5,
**characterized in that**
an object external to vehicle is identified in the environmental region (3) based on the comparison of the images (B1, B2).

7. Method according to claim 6,
**characterized in that**
a road sign is identified as the object.

8. Method according to claim 6 or 7,
**characterized in that**
a pedestrian is identified as the object.

9. Method according to claim 2 or 3 and anyone of claims 5 to 8,
**characterized in that**
the detection of the external light source is made plausible based on the comparison of the images (B1, B2).

10. Method according to anyone of the preceding claims,
**characterized in that**
the intensity of an ambient light is detected, and for avoiding of glaring of the image sensor (10), the shutter (12) is controlled depending on the intensity of the ambient light, wherein it is checked, whether the intensity of the ambient light exceeds a predetermined limit value, and upon exceeding of the limit value the shutter (12) is periodically moved between the open position and the closed position.

11. Method according to anyone of the preceding claims,
**characterized in that**
the synchronizing of the movement of the shutter (12) with the pulsed operation of the at least one light source (9) is performed wirelessly.

12. Method according to anyone of the preceding claims,
**characterized in that**
the movement of the shutter (12) is controlled by means of a controller (8) of the headlight (2).

13. Method according to anyone of the preceding claims,
**characterized in that**
the movement of the shutter (12) is controlled by means of a control unit (10) of the front camera (5).

14. Device (7) for a motor vehicle (1), including a front camera (5) for capturing images of an environmental region (3) in direction of travel in front of the motor vehicle (1), and including a frontal headlight (2) with at least one light source (9), which is operable in pulsed manner and alternately switchable between an active state ("1"), in which the at least one light source (9) is turned on, and a further state ("0"), in which the at least one light source (9) has lower light intensity than in the active state ("1"), wherein a shutter (12) is disposed in front of an image sensor (10) of the front camera (5), and the device (7) has a control means (8, 10), which is adapted to move the shutter (12) between a closed position (S1), in which the shutter (12) covers the image sensor (10) against the environmental region (3), and an open position (S0), in which the image sensor (10) is exposed to light of the environmental region (3),
**characterized in that**
the control means (8, 10) is adapted to control the movement of the shutter (12) synchronously to the pulsed operation of the at least one light source (9) for at least a preset first time interval (T1), such that the closed position (S1) of the shutter (12) completely coincides with the active state ("1") of the light source (9) and the open position (S0) of the shutter (12) completely coincides with the further state ("0") of the light source (9),
wherein at least one first image (B1) can be captured by means of the image sensor (10) within the first time interval (T1).

15. Device (7) according to claim 14,
**characterized in that**
the control means (8, 10) comprises a controller (8) of the headlight (2) and/or a control unit (10) of the front camera (5) for controlling the movement of the shutter (12).

16. Motor vehicle (1) with a device (7) according to claim 14 or 15.

## Patentansprüche

1. Verfahren zum Betreiben einer Frontkamera (5) eines Kraftfahrzeugs (1), mit der Bilder (B1, B2) einer Umfeldregion (3) in Fahrtrichtung vor dem Kraftfahrzeug (1) erfasst werden, wobei mindestens eine Lichtquelle (9) eines vorderen Scheinwerfers (2) des Kraftfahrzeugs (1) in gepulster Weise betrieben wird und hier alternierend zwischen einem aktiven Zustand ("1"), in dem die mindestens eine Lichtquelle (9) eingeschaltet ist, und einem weiteren Zustand ("0") geschaltet wird, in dem die mindestens eine Lichtquelle (9) eine niedrigere Lichtintensität als in dem aktiven Zustand ("1") hat, und wobei eine Blende (12), die vor einem Bildsensor (10) der Frontkamera (5) angeordnet ist, zwischen einer geschlossenen Position (S1), in welcher die Blende (12) den Bildsensor (10) gegenüber der Umfeldregion (3) abdeckt, und einer offenen Position (S0) bewegt wird, in welcher der Bildsensor (10) Licht der Umfeldregion (3) ausgesetzt ist, **dadurch gekennzeichnet, dass** für mindestens ein vorgegebenes erstes Zeitintervall (T1) die Bewegung der Blende (12) synchron mit dem gepulsten Betrieb der mindestens einen Lichtquelle (9) gesteuert wird, so dass die geschlossene Position (S1) der Blende (12) vollständig mit dem aktiven Zustand ("1") der Lichtquelle (9) zusammenfällt, und die offene Position (S0) der Blende (12) vollständig mit dem weiteren Zustand ("0") der Lichtquelle (9) zusammenfällt, wobei mindestens ein erstes Bild (B1) mittels des Bildsensors (10) innerhalb des ersten Zeitintervalls (T1) erfasst wird.

2. Verfahren nach Anspruch 1, **dadurch gekennzeichnet, dass** eine externe Lichtquelle basierend auf dem mindestens einen ersten Bild (B1) detektiert wird.

3. Verfahren nach Anspruch 2, **dadurch gekennzeichnet, dass** der vordere Scheinwerfer (2) des Kraftfahrzeugs (1) unter Berücksichtigung der externen Lichtquelle gesteuert wird.

4. Verfahren nach einem der vorhergehenden Ansprüche, **dadurch gekennzeichnet, dass** die Blende (12) für mindestens ein vorgegebenes zweites Zeitintervall (T2) von mindestens einer Periode des gepulsten Betriebs der mindestens einen Lichtquelle (9) kontinuierlich in der offenen Position (S0) gehalten wird, und mindestens ein zweites Bild (B2) mittels des Bildsensors (10) innerhalb des zweiten Zeitintervalls (T2) erfasst wird.

5. Verfahren nach Anspruch 4, **dadurch gekennzeichnet, dass** das mindestens eine erste Bild (B1) und das mindestens eine zweite Bild (B2) miteinander verglichen werden.

6. Verfahren nach Anspruch 5, **dadurch gekennzeichnet, dass** ein Objekt außerhalb des Fahrzeugs in der Umfeldregion (3) basierend auf dem Vergleich der Bilder (B1, B2) identifiziert wird.

7. Verfahren nach Anspruch 6, **dadurch gekennzeichnet, dass** ein Verkehrsschild als das Objekt identifiziert wird.

8. Verfahren nach Anspruch 6 oder 7, **dadurch gekennzeichnet, dass** ein Fußgänger als das Objekt identifiziert wird.

9. Verfahren nach Anspruch 2 oder 3 und einem der Ansprüche 5 bis 8, **dadurch gekennzeichnet, dass** die Detektierung der externen Lichtquelle basierend auf dem Vergleich der Bilder (B1, B2) plausibel gemacht wird.

10. Verfahren nach einem der vorhergehenden Ansprüche, **dadurch gekennzeichnet, dass** die Intensität eines Umgebungslichts detektiert wird, und die Blende (12), um Blenden des Bildsensors (10) zu vermeiden, in Abhängigkeit von der Intensität des Umgebungslichts gesteuert wird, wobei geprüft wird, ob die Intensität des Umgebungslichts einen vorbestimmten Grenzwert überschreitet, und wobei die Blende (12) bei Überschreiten des Grenzwerts periodisch zwischen der offenen Position und der geschlossenen Position bewegt wird.

11. Verfahren nach einem der vorhergehenden Ansprüche, **dadurch gekennzeichnet, dass** das Synchronisieren der Bewegung der Blende (12) mit dem gepulsten Betrieb der mindestens einen Lichtquelle (9) drahtlos durchgeführt wird.

12. Verfahren nach einem der vorhergehenden Ansprüche, **dadurch gekennzeichnet, dass** die Bewegung der Blende (12) mittels einer Steuerung (8) des Scheinwerfers (2) gesteuert wird.

13. Verfahren nach einem der vorhergehenden Ansprüche, **dadurch gekennzeichnet, dass** die Bewegung der Blende (12) mittels einer Steuereinheit (10) der Frontkamera (5) gesteuert wird.

14. Vorrichtung (7) für ein Kraftfahrzeug (1), einschließlich einer Frontkamera (5) zum Erfassen von Bildern einer Umfeldregion (3) in Fahrtrichtung vor dem Kraftfahrzeug (1), und einschließlich eines vorderen Scheinwerfers (2) mit mindestens einer Lichtquelle (9), die in gepulster Weise betreibbar ist und alternierend zwischen einem aktiven Zustand ("1"), in dem die mindestens eine Lichtquelle (9) eingeschaltet ist, und einem weiteren Zustand ("0"), in dem die mindestens eine Lichtquelle (9) eine niedrigere Lichtintensität als in dem aktiven Zustand ("1") hat, schaltbar ist, wobei eine Blende (12) vor einem Bildsensor (10) der Frontkamera (5) angeordnet ist, und die Vorrichtung (7) ein Steuermittel (8, 10) aufweist, das geeignet ist, um die Blende (12) zwischen einer geschlossenen Position (S1), in der die Blende (12) den Bildsensor (10) gegenüber der Umfeldregion (3) abdeckt, und einer offenen Position (S0) zu bewegen, in welcher der Bildsensor (10) Licht der Umfeldregion (3) ausgesetzt ist, **dadurch gekennzeichnet, dass** das Steuermittel (8, 10) geeignet ist, um die Bewegung der Blende (12) synchron zu dem gepulsten Betrieb der mindestens einen Lichtquelle (9) für mindestens ein vorgegebenes erstes Zeitintervall (T1) zu steuern, so dass die geschlossene Position (S1) der Blende (12) vollständig mit dem aktiven Zustand ("1") der Lichtquelle (9) zusammenfällt und die offene Position (S0) der Blende (12) vollständig mit dem weiteren Zustand ("0") der Lichtquelle (9) zusammenfällt, wobei mindestens ein erstes Bild (B1) mittels des Bildsensors (10) innerhalb des ersten Zeitintervalls (T1) erfasst werden kann.

15. Vorrichtung (7) nach Anspruch 14, **dadurch gekennzeichnet, dass** das Steuermittel (8, 10) eine Steuerung (8) des Scheinwerfers (2) und/oder eine Steuereinheit (10) der Frontkamera (5) umfasst, um die Bewegung der Blende (12) zu steuern.

16. Kraftfahrzeug (1) mit einer Vorrichtung (7) nach Anspruch 14 oder 15.

## Revendications

1. Procédé de fonctionnement d'une caméra avant (5) d'un véhicule à moteur (1), au moyen de laquelle des images (B1, B2) d'une région environnementale (3) dans la direction de déplacement devant le véhicule à moteur (1) sont capturées, dans lequel au moins une source de lumière (9) d'un feu avant (2) du véhicule à moteur (1) est utilisée de manière pulsée et dans ce cadre est commutée alternativement entre un état actif ("1"), dans lequel l'au moins une source de lumière (9) est allumée, et un autre état ("0"), dans lequel l'au moins une source de lumière (9) a une plus faible intensité lumineuse que dans l'état actif ("1"), et dans lequel un obturateur (12) disposé devant un capteur d'images (10) de la caméra avant (5) est déplacé entre une position fermée (S1), dans laquelle l'obturateur (12) recouvre le capteur d'images (10), le protégeant de la région environnementale (3), et une position ouverte (S0), dans laquelle le capteur d'images (10) est exposé à la lumière de la région environnementale (3), **caractérisé en ce que**
pendant au moins un premier intervalle de temps prédéfini (T1), le déplacement de l'obturateur (12) est commandé de façon synchrone avec le fonctionnement pulsé de l'au moins une source de lumière (9), de telle sorte que la position fermée (S1) de l'obturateur (12) coïncide entièrement avec l'état actif ("1") de la source de lumière (9) et la position ouverte (S0) de l'obturateur (12) coïncide entièrement avec l'autre état ("0") de la source de lumière (9), au moins une première image (B1) étant capturée au moyen du capteur d'images (10) dans le premier intervalle de temps (T1).

2. Procédé selon la revendication 1,
**caractérisé en ce que**
une source de lumière externe est détectée sur la base de l'au moins une première image (B1).

3. Procédé selon la revendication 2,
**caractérisé en ce que**
le feu avant (2) du véhicule à moteur (1) est commandé en tenant compte de la source de lumière externe.

4. Procédé selon l'une quelconque des revendications précédentes,
**caractérisé en ce que**
pendant au moins un deuxième intervalle de temps prédéfini (T2) d'au moins une période du fonctionnement pulsé de l'au moins une source de lumière (9), l'obturateur (12) est maintenu de façon continue dans la position ouverte (S0), et au moins une deuxième image (B2) est capturée au moyen du capteur d'images (10) dans le deuxième intervalle de temps (T2).

5. Procédé selon la revendication 4,
**caractérisé en ce que**
l'au moins une première image (B1) et l'au moins une deuxième image (B2) sont comparées l'une à l'autre.

6. Procédé selon la revendication 5,
**caractérisé en ce que**
un objet externe au véhicule est identifié dans la région environnementale (3) sur la base de la comparaison des images (B1, B2).

7. Procédé selon la revendication 6,
**caractérisé en ce que**
un panneau de signalisation est identifié comme l'objet.

8. Procédé selon la revendication 6 ou 7,
**caractérisé en ce que**
un piéton est identifié comme l'objet.

9. Procédé selon la revendication 2 ou 3 et l'une quelconque des revendications 5 à 8,
**caractérisé en ce que**
la détection de la source de lumière externe est rendue plausible sur la base de la comparaison des images (B1, B2).

10. Procédé selon l'une quelconque des revendications précédentes,
**caractérisé en ce que**
l'intensité d'une lumière ambiante est détectée, et pour éviter d'éblouir le capteur d'images (10), l'obturateur (12) est commandé en fonction de l'intensité de la lumière ambiante, dans lequel il est vérifié si l'intensité de la lumière ambiante dépasse une valeur limite prédéterminée, et lors du déplacement de la valeur limite, l'obturateur (12) est déplacé périodiquement entre la position ouverte et la position fermée.

11. Procédé selon l'une quelconque des revendications précédentes,
**caractérisé en ce que**
la synchronisation du déplacement de l'obturateur (12) avec le fonctionnement pulsé de l'au moins une source de lumière (9) est effectuée sans fil.

12. Procédé selon l'une quelconque des revendications précédentes,
**caractérisé en ce que**
le déplacement de l'obturateur (12) est commandé au moyen d'un dispositif de commande (8) du feu avant (2) .

13. Procédé selon l'une quelconque des revendications précédentes,
**caractérisé en ce que**
le déplacement de l'obturateur (12) est commandé au moyen d'une unité de commande (10) de la caméra avant (5).

14. Dispositif (7) pour un véhicule à moteur (1), comportant une caméra avant (5) destinée à capturer des images d'une région environnementale (3) dans la direction de déplacement devant le véhicule à moteur (1), et comportant un feu avant (2) avec au moins une source de lumière (9), qui est utilisable de manière pulsée et commutable alternativement entre un état actif ("1"), dans lequel l'au moins une source de lumière (9) est allumée, et un autre état ("0"), dans lequel l'au moins une source de lumière (9) a une plus faible intensité lumineuse que dans l'état actif ("1"), un obturateur (12) étant disposé devant un capteur d'images (10) de la caméra avant (5), et le dispositif (7) ayant un moyen de commande (8, 10), qui est adapté pour déplacer l'obturateur (12) entre une position fermée (S1), dans laquelle l'obturateur (12) recouvre le capteur d'images (10), le protégeant de la région environnementale (3), et une position ouverte (S0), dans laquelle le capteur d'images (10) est exposé à la lumière de la région environnementale (3),
**caractérisé en ce que**
le moyen de commande (8, 10) est adapté pour commander le déplacement de l'obturateur (12) de façon synchrone avec le fonctionnement pulsé de l'au moins une source de lumière (9) pendant au moins un premier intervalle de temps prédéfini (T1), de telle sorte que la position fermée (S1) de l'obturateur (12) coïncide entièrement avec l'état actif ("1") de la source de lumière (9) et la position ouverte (S0) de l'obturateur (12) coïncide entièrement avec l'autre état ("0") de la source de lumière (9),
au moins une première image (B1) pouvant être capturée au moyen du capteur d'images (10) dans le premier intervalle de temps (T1).

15. Dispositif (7) selon la revendication 14,
**caractérisé en ce que**
le moyen de commande (8, 10) comprend un dispositif de commande (8) du feu avant (2) et/ou une unité de commande (10) de la caméra avant (5) pour commander le déplacement de l'obturateur (12).

16. Véhicule à moteur (1) avec un dispositif (7) selon la revendication 14 ou 15.
